# EUROPEAN PATENT APPLICATION

(11) **EP 4 546 811 A1**
(43) Date of publication of application: **30.04.2025**
(21) Application number: 23850248.8
(22) Date of filing: 19.06.2023
(51) Int. Cl.: H04N 23/88, H04N 23/12, H04N 23/80, H04N 23/71, G06N 20/00, H04N 9/73

(54) **ELECTRONIC DEVICE FOR GENERATING IMAGE AND OPERATION METHOD THEREOF**

(30) Priority: 02.08.2022 KR 20220095858; 16.09.2022 KR 20220117099
(71) Applicant: Samsung Electronics Co., Ltd., Suwon-si, Gyeonggi-do 16677 (KR)
(72) Inventor: HONG, Hyeonseok, Suwon-si Gyeonggi-do 16677 (KR); PARK, Dongyoul, Suwon-si Gyeonggi-do 16677 (KR); JANG, Taesoo, Suwon-si Gyeonggi-do 16677 (KR); JUN, Eunsuk, Suwon-si Gyeonggi-do 16677 (KR)
(74) Representative: Nederlandsch Octrooibureau
(86) International application number: PCT/KR2023/008435
(87) International publication number: WO 2024/029738

(57) **Abstract**

An electronic device according to various embodiments may comprise: a camera; a memory having instructions stored therein; at least one sensor; and a processor operatively connected the camera, the at least one sensor, and the memory. The processor may be configured to classify the type of a light source on the basis of data for each band channel, detected through the at least one sensor.

## Description

### Technical Field

The disclosure relates to an electronic device for providing an image and an operating method thereof.

### Background Art

An electronic device can acquire image data by using a digital camera, and generate an image from the acquired image data. Alternatively, the electronic device can generate an image by performing an image processing operation on image data stored in a memory. The electronic device can control an operation of acquiring the image data or an operation of processing the image data.

For example, even when the same subject is photographed, the shape of the subject in a photographed image can appear in a different color depending on a color temperature of a light source disposed around the subject. Even when the original color of the subject is white, a reddish image can be photographed if a color temperature of lighting or light source is low, and a blueish image can be photographed if the color temperature is high. The electronic device can perform white balancing (WB) processing on the photographed image so as to express the original color.

The above-described information can be provided as related art for the purpose of helping the understanding of the disclosure. No claim or determination is made as to whether any of the above-described contents is applicable as prior art in connection with the disclosure.

### Disclosure of Invention

### Solution to Problem

An electronic device of an embodiment may include at least one camera, at least one sensor, at least one memory, and at least one processor. The camera may be configured to acquire an image. The at least one sensor may include an ultra-violet channel detecting light in an ultra-violet band, a visible channel detecting light in a visible band, and an infra-red channel detecting light in an infra-red band. Instructions may be stored in the memory. The at least one processor may be operatively connected to the camera, the at least one sensor, and the memory. The at least one processor may be configured to, when executing the instructions, determine a reference value, based on a ratio of infra-red data acquired through the infra-red channel to visible data acquired through the visible channel. The at least one processor may be configured to determine that the type of an ambient light source for the image acquired through the camera is a first light source, when the reference value is greater than or equal to a first boundary value determined based on a ratio of ultra-violet data acquired through the ultra-violet channel to the visible data. The at least one processor may be configured to calibrate a color temperature of the image, based on the type of the light source.

An operating method of an electronic device of an embodiment may include acquiring an image through a camera. The operating method may include determining a reference value, based on a ratio of infra-red data acquired through an infra-red channel of at least one sensor to visible data acquired through a visible channel of the at least one sensor. The operating method may include determining that the type of an ambient light source for the image acquired through the camera is a first light source, when the reference value is greater than or equal to a first boundary value determined based on a ratio of ultra-violet data acquired through an ultra-violet channel of the at least one sensor to the visible data. The operating method may include calibrating a color temperature of the image, based on the type of the light source.

A computer-readable non-transitory storage medium of an embodiment may be a record of a computer program that, when executed, allows an electronic device to perform acquiring an image through a camera, determining a reference value, based on a ratio of infra-red data acquired through an infra-red channel of at least one sensor to visible data acquired through a visible channel of the at least one sensor, and determining that the type of an ambient light source for the image acquired through the camera is a first light source, when the reference value is greater than or equal to a first boundary value determined based on a ratio of ultra-violet data acquired through an ultra-violet channel of the at least one sensor to the visible data.

### Brief Description of Drawings

FIG. 1 is a block diagram of an electronic device in a network environment according to various embodiments.
Fig. 2 is a block diagram illustrating the camera module according to various embodiments.
FIG. 3 is a block diagram illustrating components of an electronic device according to an embodiment.
FIG. 4 is a graph illustrating the responsivity for each frequency of at least one sensor according to an embodiment.
FIG. 5 is a diagram illustrating the arrangement of at least one sensor according to an embodiment.
FIG. 6 is a diagram illustrating examples of arrangement of photodiodes included in at least one sensor according to an embodiment.
FIG. 7 is a graph illustrating examples of training data and test data which are acquired through an infra-red channel and a visible channel.
FIG. 8 is a graph illustrating examples of training data and test data which are acquired through an infra-red channel, a visible channel, and an infra-red channel.
FIG. 9 is a flowchart illustrating a process in which an electronic device operates according to an embodiment.
FIG. 10 is a flowchart illustrating an example of a process of distinguishing a light source, based on a two-dimensional space.
FIG. 11 is a flowchart illustrating an example of a process of distinguishing a light source, based on a three-dimensional space.
FIG. 12 is a graph for explaining a method of classifying data acquired through an infra-red channel, a visible channel, and an infra-red channel into three light sources.

### Mode for Carrying out the Invention

The disclosure relates to a device for performing image processing on an image or photographing an image by using a camera, and an operating method thereof.

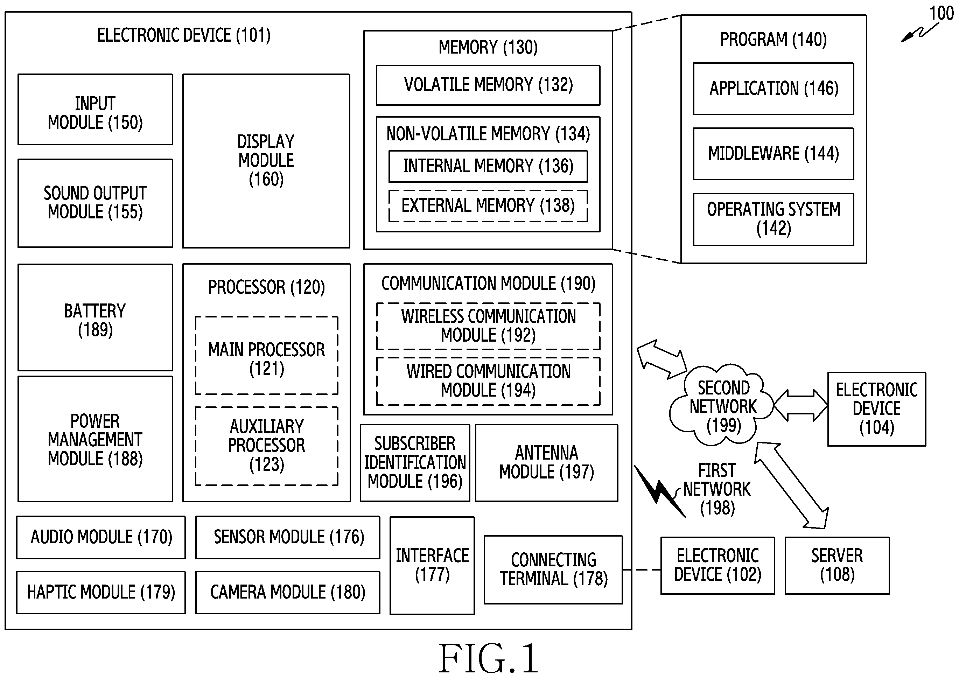

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation operations. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a particular function. The auxiliary processor 123 may be implemented as separate from, or as part of the main processor 121.

The auxiliary processor 123 may control at least some of the functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, and/or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store a wide-range of data used by at least one component (e.g., the processor 120 or the sensor module 176) of the electronic device 101. This data may include, for example, software (e.g., the program 140) and input data or output data for a command related thererto. The memory 130 may include the volatile memory 132 and/or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, and/or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performance to the electronic device 101. The electronic device 101 may provide the outcome, with or without further processing of the outcome, as at least part of a reply to the request. To that end, a cloud computing, distributed computing, mobile edge computing (MEC), and/or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," "circuit" or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively, or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

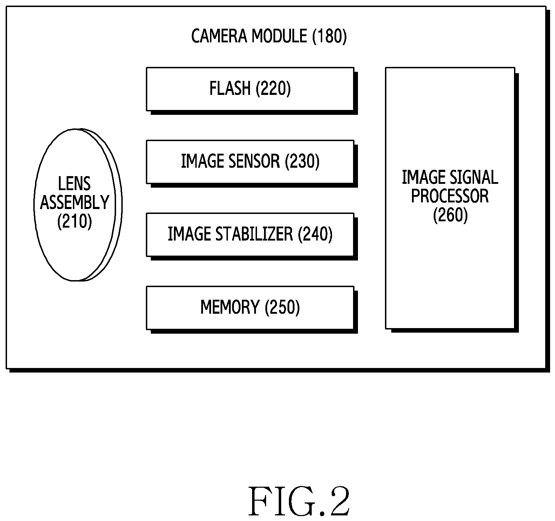

FIG. 2 is a block diagram 200 illustrating the camera module 180 according to various embodiments. Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.
The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing tasks with respect to an image obtained via the image sensor 230 or an image stored in the memory 250. The one or more image processing tasks may include, for example, depth map generation, three-dimensional (3D) modeling, panorama generation, feature point extraction, image synthesizing, and/or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

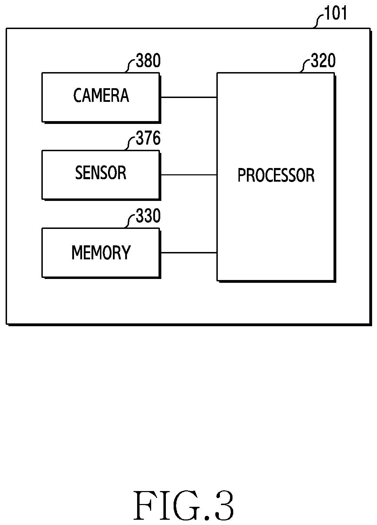

FIG. 3 is a block diagram illustrating components of an electronic device 101 according to an embodiment.

The electronic device 101 of an embodiment may include a camera 380 (example: camera module 180 of FIG. 1 or 2), at least one sensor 376 (example: sensor module 176 of FIG. 1), a memory 330 (example: memory 130 of FIG. 1), and at least one processor 320 (example: processor 120 of FIG. 1).

In an embodiment, the camera 380 may output image data, based on light detected through an image sensor (example: image sensor 230 of FIG. 2). The at least one sensor 376 may include at least one channel detecting light having a wavelength within at least one specified band. The at least one channel included in the at least one sensor 376 may include a photodiode detecting light in a specific wavelength band. The at least one channel included in the at least one sensor 376 may further include at least a part of a path through which a signal obtained by the photodiode is output from the photodiode and is input to another component. For example, the at least one sensor 376 may include at least one of a photodiode obtaining light in an infra-red band, a photodiode obtaining light in a visible band, or a photodiode obtaining light in an ultra-violet band.

The at least one processor 320 may be operatively connected to the camera 380, the at least one sensor 376, and the memory 330. The at least one processor 320 may execute instructions stored in the memory 330 and control the operation of the electronic device 101.

The at least one processor 320 of an embodiment may acquire light quantity data corresponding to the intensity of light obtained for each channel of the at least one sensor 376. For example, the at least one processor 320 may acquire infra-red data, based on a signal value corresponding to the intensity of light obtained through an infra-red channel, received from the at least one sensor 376. The at least one processor 320 may acquire visible data, based on a signal value corresponding to the intensity of light obtained through a visible channel, received from the at least one sensor 376. The at least one processor 320 may obtain ultra-violet data, based on a signal value corresponding to the intensity of light obtained through an ultra-violet channel, received from the at least one sensor 376. For example, the light quantity data may include at least one of the infra-red data, the visible data, or the ultra-violet data. For example, the infra-red data may include an infra-red intensity value that is determined based on the intensity of a signal output from a photodiode detecting infra-red light. For example, the visible data may include a visible intensity value that is determined based on the intensity of a signal output from a photodiode detecting visible light. For example, the ultra-violet data may include an ultra-violet intensity value that is determined based on the intensity of a signal output from a photodiode detecting ultra-violet light.

The at least one processor 230 may classify the type of an ambient light source, based on light quantity data. For example, the at least one processor 230 may determine, as a reference value, a value obtained by dividing infra-red data by visible data (example: a ratio of a value included in the infra-red data to a value included in the visible data). When the reference value is smaller than a boundary value, the at least one processor 230 may determine that the ambient light source is an outdoor light source. On the other hand, when the reference value is larger than the boundary value, the at least one processor 230 may determine that the ambient light source is an indoor light source. The at least one processor 230 may determine that the indoor light source is a red light source (example: light source A / light source H).

The at least one processor 230 may determine a boundary value by using a boundary function. For example, the at least one processor 230 may input a value obtained by dividing ultra-violet data by visible data (example: a ratio of a value included in the ultra-violet data to a value included in the visible data), to the boundary function, and acquire the boundary value. When the at least one processor 230 classifies a light source into one of three types (example: an outdoor light source, a white light source (cool white fluorescent (CWF)), and a red light source), the at least one processor 230 may use a first boundary function and a second boundary function. For example, the at least one processor may input a ratio of the ultra-violet data to the visible data to the first boundary function and determine a first boundary value, and may input the ratio of the ultra-violet data to the visible data to the second boundary function and determine a second boundary value. The at least one processor may compare the reference value with the first boundary value and the second boundary value and classify the type of an ambient light source. However, the disclosure is not limited thereto, and the at least one processor 230 may use a plurality of boundary functions according to the number of types of light sources to be classified.

In an embodiment, the boundary function may be determined by machine training. The boundary function may be determined by training, through a machine training algorithm, training data including light quantity data acquired for each light source to be classified. The boundary function may be determined by the electronic device or may be determined by another device (example: a server). Alternatively, the boundary function may be set to the memory of the electronic device when the electronic device is manufactured. For example, the training data may include ultra-violet data, visible data, and infra-red data as feature data, and may include data indicating the type of an ambient light source as labeling data. For example, the machine training algorithm may be a linear support vector machine (linear SVM) or a non-linear support vector machine (non-linear SVM). Alternatively, other machine training algorithms such as deep learning may be used, but a valid boundary function may be obtained even with a lightweight machine training algorithm such as SVM. The boundary function may be a ratio probability relationship that is determined based on a probability of ratio values. However, the disclosure is not limited to this example.

The at least one processor 230 may control an operation for photographing an image according to the type of a classified light source. For example, the at least one processor 230 may classify a light source according to a color temperature as shown in Table 1 below. The at least one processor 230 may determine a gain control value that is applied to perform automatic white balancing (AWB) according to the classified light source. The gain control value may be included in an automatic white balancing parameter for calibrating a color temperature of an image acquired through the camera 380, for example, as shown in table 1 below.

**[Table 1]**

| Color temperature | Light source type | AWB gain control value |
|---|---|---|
| 7000 | daylight fluorescent lamp, mercury lamp | R=2.292, G=1, B=1.343 |
| 6500 | D65 light source (average daylight) | R=2.203, G=1, B=1.370 |
| 5000 | D50 light source | R=1.853, G=1, B=1.562 |
| 4000 | white fluorescent lamp, warm white fluorescent lamp, halogen lamp | R=1.563, G=1, B=1.770 |
| 3300 | silver white fluorescent lamp, high temperature sodium lamp | R=1.351, G=1, B=2.083 |
| 2300 | horizontal sunlight | R=1.136, G=1, B=2.2778 |

However, the color temperature classification and the gain control values shown in Table 1 above are only examples and are not limited thereto.

According to an embodiment, the at least one processor 320 may control an operation for photographing an image, based on a distance from a reference value to a boundary value. For example, when an ambient light source is classified as a red indoor light source, based on a boundary function, the at least one processor 320 may perform automatic white balancing through interpolation according to the distance from the reference value to the boundary function. Accordingly, when light quantity data is provided around a boundary where a light source is classified, a color temperature of a provided image may be prevented from changing discontinuously as the light source classification changes.

For another example, the at least one processor 320 may also control the exposure of the camera 380 according to the type of the classified ambient light source.

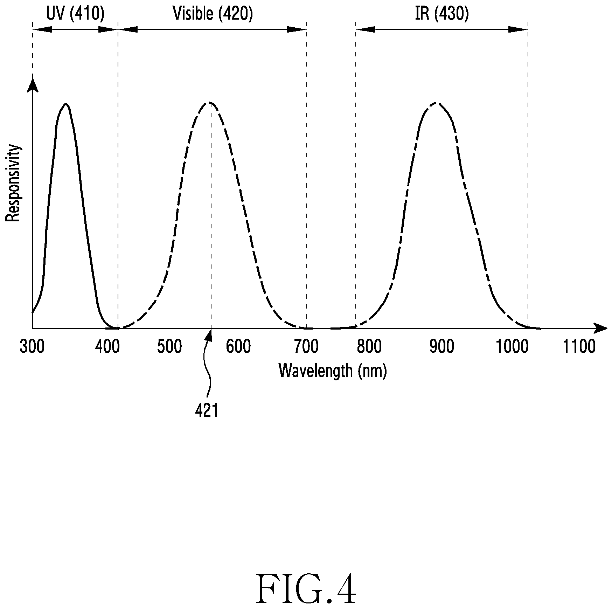

FIG. 4 is a graph illustrating the responsivity for each frequency of at least one sensor (example: sensor 376 of FIG. 3) according to an embodiment.

FIG. 4 relates to a case where the at least one sensor (example: sensor 376 of FIG. 3) includes an ultra-violet channel detecting light in an ultra-violet band 410, a visible channel detecting light in a visible band 420, and an infra-red channel detecting light in an infra-red band 430. The at least one sensor (example: sensor 376 of FIG. 3) may output signals by detecting the light in the ultra-violet band 410, the light in the visible band 420, and the light in the infra-red band 430, to the ultra-violet channel, the visible channel, and the infra-red channel, respectively. At least one processor (example: processor 320 of FIG. 3) may acquire ultra-violet data, visible data, and infra-red data through the ultra-violet channel, the visible channel, and the infra-red channel, respectively.

The at least one sensor (example: sensor 376 of FIG. 3) may be configured to be responsive dependent on the purpose of controlling a photographing operation. For example, the at least one sensor (example: sensor 376 of FIG. 3) within the visible band 420 may be configured wherein the responsivity decreases as a wavelength of light increases or decreases from a specified wavelength 421. Since light within the visible band 420 is light in a wavelength band that may be recognized by the human eye, the at least one sensor (example: sensor 376 of FIG. 3) may be configured wherein the responsivity follows, within the visible band 420, a luminosity curve that represents a degree to which the human eye may recognize by each wavelength band. Since the at least one sensor (example: sensor 376 of FIG. 3) includes the infra-red channel separately from the visible channel, the electronic device 101 may more accurately measure a ratio of infra-red to visible light. For example, the infra-red channel may be a channel detecting light in a near infra-red (NIR) band. Even when the type of a light source is different depending on a scene photographed in an image provided by the electronic device 101, there may occur a case where visible data are similar to infra-red data. When the at least one sensor (example: sensor 376 of FIG. 3) includes the ultra-violet channel, the light source may be classified more accurately even when the visible data are similar to the infra-red data. The ultra-violet channel may be, for example, a channel detecting light in an ultra-violet band including a UV-A band. However, the disclosure is not limited thereto.

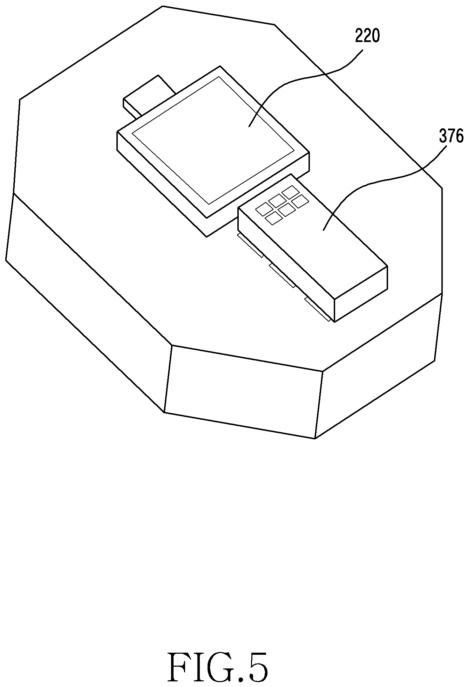

FIG. 5 is a diagram illustrating the arrangement of at least one sensor (example: sensor 376 of FIG. 3) according to an embodiment.

The at least one sensor (example: sensor 376 of FIG. 3) may be arranged in the direction in which a lens of a camera (example: camera 380 of FIG. 3) faces, wherein the least lest one sensor faces a subject photographed by the camera (example: camera 380 of FIG. 3). For example, the at least one sensor (example: 376 of FIG. 3) may be arranged around a flash 220. The electronic device 101 may include a transparent panel or lens that is arranged wherein light provided from the flash 220 may be emitted to the outside. The at least one sensor (example: sensor 376 of FIG. 3) illustrated in FIG. 5 may detect light incident through the transparent panel or lens. However, FIG. 5 is for explaining an example of the at least one sensor (example: sensor 376 of FIG. 3), and a construction of the at least one sensor (example: sensor 376 of FIG. 3) is not limited to a form illustrated in FIG. 5.

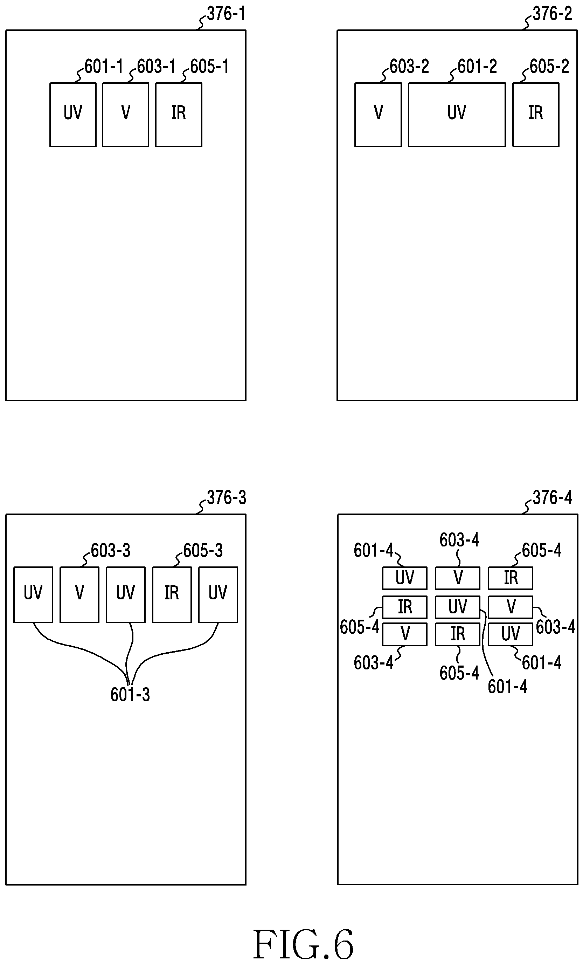

FIG. 6 is a drawing illustrating examples of arrangement of a photo diode (PD) included in at least one sensor (example: sensor 376 of FIG. 3) according to an embodiment. The arrangement of the photodiode included in the at least one sensor (example: sensor 376 of FIG. 3) according to an embodiment may be changed variously.

For example, at least one sensor 376-1 may have an ultra-violet PD 601-1, a visible PD 603-1, and an infra-red PD 605-1 arranged in a row, each having the same area. The ultra-violet PD 601-1 may detect light in an ultra-violet band. The visible PD 603-1 may detect light in a visible band. The infra-red PD 605-1 may detect light in an infra-red band.

For example, the area of a PD corresponding to some channel may be configured differently from the area of a PD corresponding to another channel, wherein a sensitivity to light for each channel may be configured similarly. With reference to at least one sensor 376-2, an ultra-violet PD 601-2 may be arranged wherein the area of the ultra-violet PD 601-2 is larger than that of a visible PD 603-2 or an infra-red PD 605-2.

For example, the number of a PD corresponding to some channel may be different from the number of a PD corresponding to another channel, wherein a sensitivity to light for each channel may be configured similarly. With reference to at least one sensor 376-3, an ultra-violet PD 601-3 may be arranged in a larger number than a visible PD 603-3 or an infra-red PD 605-3.

For example, a PD for each channel may be arranged in a grid shape, whereby a solution may be provided to a drawback that the amount of light received by some channel becomes different from the amount of light received by another channel when the amount of light incident on some channel is different from the amount of light incident on another channel (example: when some PDs are shadowed). With reference to at least one sensor 376-4, an ultra-violet PD 601-4, a visible PD 603-4, and an infra-red PD 605-4 may be arranged alternately.

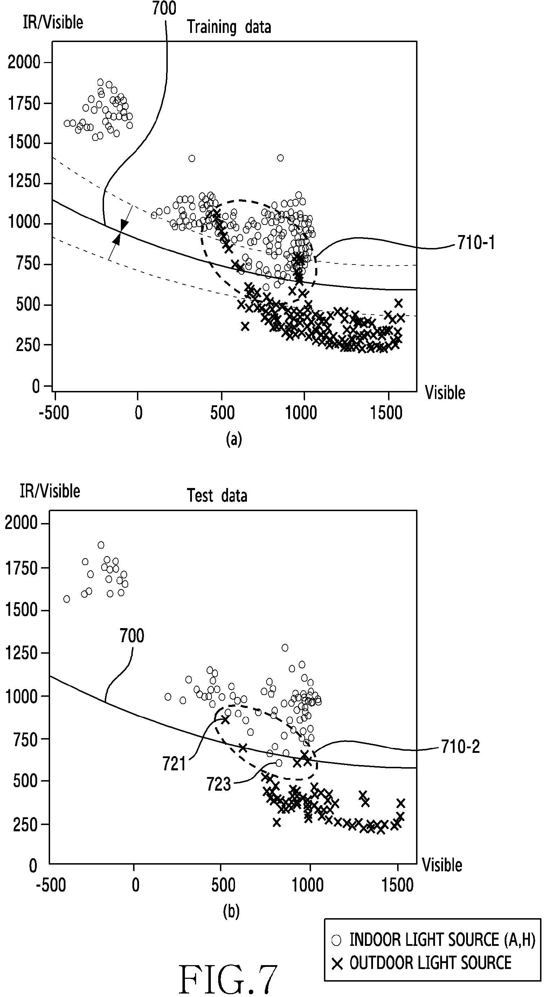

FIG. 7 is a diagram illustrating examples of training data (example: FIG. 7(a)) and test data (example: FIG. 7(b)) which are acquired through an infra-red (particularly, near infra-red) channel and a visible channel.

A boundary function 700 for distinguishing between outdoor light source data and indoor light source (A, H) data may be determined by training the training data (example: FIG. 7(a)) using a machine training algorithm. The boundary function 700 may be determined as a function having the highest possibility of accurately distinguishing the type of light source, based on the training data (example: FIG. 7(a)). The electronic device may acquire visible data and infra-red data through at least one sensor. The electronic device 100 may determine, as a reference value, a value obtained by dividing the infra-red data by the visible data (example: a ratio of the infra-red data to the visible data). When the reference value is greater than a boundary value obtained by inputting the visible data to the boundary function 700, the electronic device 101 may determine that an ambient light source is an indoor light source (A, H). When the reference value is smaller than the boundary value, the electronic device 101 may determine that the ambient light source is an outdoor light source.

When a light source is classified based on an infra-red channel and a visible channel, regions (710-1, 710-2) where data acquired through the two channels overlap on the graph may be provided relatively widely. When the electronic device classifies light sources for the data located within the regions (710-1, 710-2) overlapping on the graph, there is a possibility that the electronic device makes wrong distinction. For example, in case of data 721 acquired under the outdoor light source, since the reference value is higher than a value of the boundary function 700, the electronic device may classify, as the indoor light source (A, H), the type of an ambient light source corresponding to the data 721. On the other hand, the electronic device may classify, as an outdoor light source, the type of an ambient light source corresponding to data 723 acquired under the indoor light source (A, H).

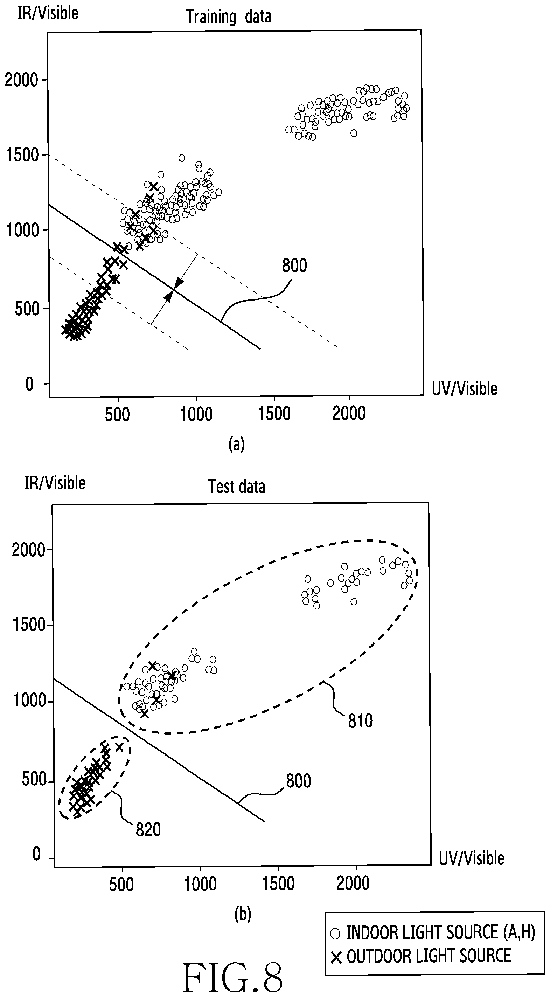

FIG. 8 is a diagram illustrating examples of training data (example: FIG. 8 (a)) and test data (example: FIG. 8 (b)) which are acquired through an infra-red channel, a visible channel, and an infra-red channel.

When light quantity data are acquired under different light sources but have similar ratios of infra-red data to visible data, an error may occur in the type of light sources classified only with infra-red data and visible data. According to an embodiment, the electronic device may classify the type of the light source more accurately, by considering ultra-violet data in addition to the infra-red data and the visible data.

A boundary function 800 for determining what an ambient light source of data is may be determined by training the training data (example: FIG. 8 (a)) using a machine training algorithm. The training data (example: FIG. 8 (a)) may include feature data determined based on the ultra-violet data, the visible data, and the infra-red data, and labeling data indicating the type of an ambient light source corresponding to the corresponding data. For example, the feature data may include a value obtained by dividing the ultra-violet data by the visible data and a value obtained by dividing the infra-red data by the visible data, and the labeling data may include information indicating an indoor light source or an outdoor light source. The boundary function 800 may be determined as a function having the highest possibility of accurately distinguishing the type of the light source, based on the training data (example: FIG. 8 (a)).

The electronic device may acquire the visible data and the infra-red data through at least one sensor. The electronic device 101 may determine, as a reference value, a value obtained by dividing the infra-red data by the visible data (example: a ratio of the infra-red data to the visible data). The electronic device 101 may input a value obtained by dividing ultra-violet data by the visible data to the boundary function 800 and determine a boundary value. When the reference value is greater than the boundary value, the electronic device 101 may determine the type of the light source as an indoor light source (A, H). When the reference value is less than the boundary value, the electronic device 101 may determine the type of the light source as an outdoor light source.

When the graph is displayed based on the value obtained by dividing the ultra-violet data by the visible data and the value obtained by dividing the infra-red data by the visible data, a distance between a region 810 where data obtained around the indoor light source (A, H) are shown and a region 820 where data obtained around the outdoor light source are shown appears relatively far. Therefore, when the type of an ambient light source is classified based on the ultra-violet data, the visible data, and the infra-red data, there is a high possibility of more accurately determining the type of the light source than when the type of the ambient light source is classified only with the visible data and the infra-red data.

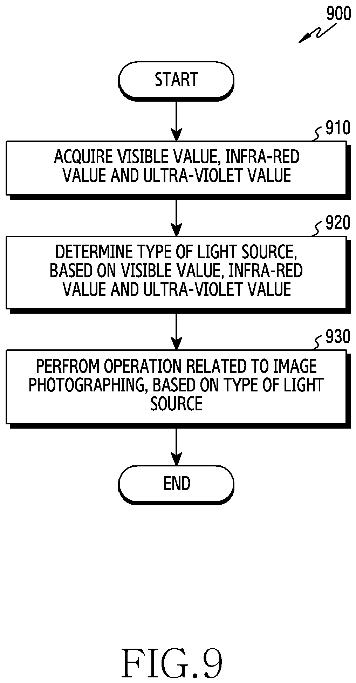

FIG. 9 is a flowchart 900 illustrating a process in which the electronic device 101 operates according to an embodiment. In the disclosure, the operation of the electronic device 101 may be understood as being performed by the processor (example: at least one processor 320 of FIG. 3) of the electronic device 101 executing instructions stored in a memory (example: memory 330 of FIG. 3).

In operation 910, the electronic device 101 may acquire light quantity data through the at least one sensor 376. The light quantity data may include at least one of visible data, infra-red data, or ultra-violet data. The visible data may include a visible value representing a light quantity of light in a visible band. The infra-red data may include an infra-red value representing a light quantity of light in an infra-red band. The ultra-violet data may include an ultra-violet value representing a light quantity of light in an ultra-violet band.

The light quantity data acquired in operation 910 may be related to the time at which the electronic device 101 photographs an image. For example, the electronic device 101 may receive a user input of requesting to photograph a still image, based on a camera application. In response to the user input, the electronic device 101 may acquire light quantity data. Also, for example, the electronic device 101 may continuously monitor the light quantity data while displaying a preview image through a display (example: display module 160 of FIG. 1). Also, for example, the electronic device 101 may continuously monitor the light quantity data while shooting a video as well.

In operation 920, the electronic device 101 may determine the type of a light source, based on at least one of the visible data, the infra-red data, or the ultra-violet data. The electronic device 101 may classify the type of the light source by using a boundary function. The electronic device 101 may determine the type of the light source, based on a result of comparing a reference value determined based on the light quantity data with a boundary value.

For example, the electronic device 101 may determine the reference value, based on the infra-red data, the ultra-violet data, and the visible data. The electronic device 101 may determine, as the reference value, a value obtained by dividing an infra-red value corresponding to the infra-red data by a visible value corresponding to the visible data (example: a ratio of the infra-red data to the visible data). The electronic device may input a value obtained by dividing an ultra-violet value corresponding to the ultra-violet data by the visible value (example: a ratio of the ultra-violet data to the visible data), to the boundary function, and determine the boundary value. The electronic device 101 may determine the type of a light source, based on whether the reference value is greater than the boundary value. Alternatively, the electronic device 101 may determine the type of the light source, based on whether the reference value is less than the boundary value.

In operation 930, the electronic device 101 may perform an operation related to image photographing, based on the determined type of the light source. For example, the electronic device 101 may acquire an image through a camera (example: camera module 180 of FIG. 1), and calibrate a color temperature of the acquired image, based on an automatic white balancing parameter corresponding to the type of the light source. For another example, the electronic device 101 may also adjust the exposure of the camera for photographing an image.

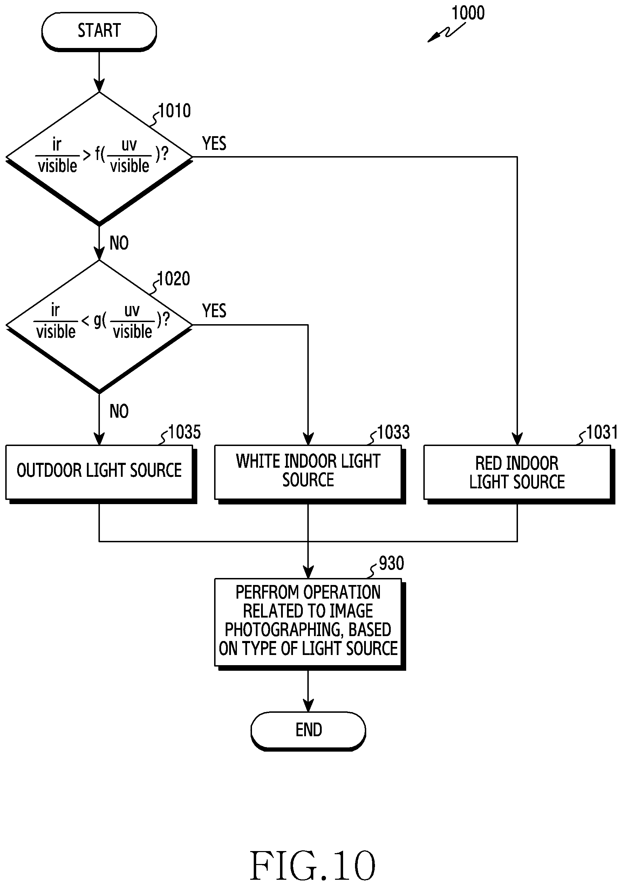

FIG. 10 is a flowchart 1000 illustrating an example of a process for distinguishing a light source, based on a two-dimensional space.

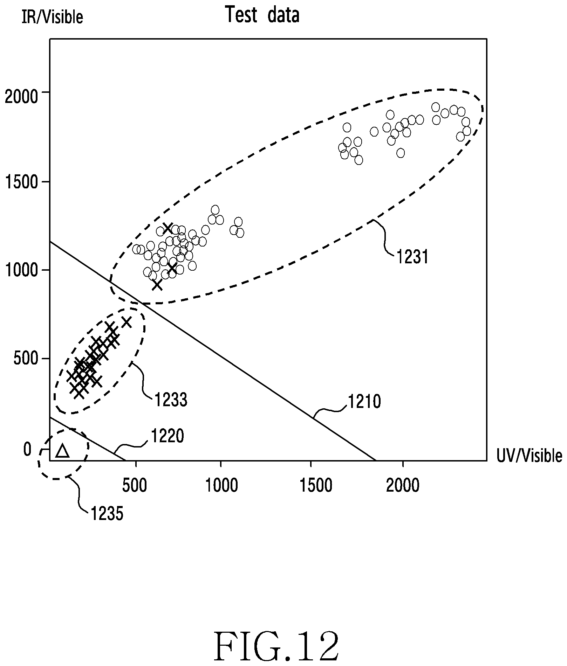

In operation 1010, the electronic device 101 may determine whether a reference value (ir/visible) is greater than a first boundary value (f(uv/visible)) determined based on a first boundary function (f). When the reference value (ir/visible) is greater than the first boundary value (f(uv/visible)), in operation 1031, the electronic device 101 may determine that an image is photographed around a red indoor light source. Referring to FIG. 12, on a graph in which a horizontal axis indicates an ultra-violet value (UV) / visible value (Visible) and a vertical axis indicates an infra-red value (IR) / visible value (Visible), data 1231 appearing in a region having a higher value on the vertical axis than the first boundary function 1210 may be determined to correspond to the red indoor light source.

When the reference value (ir/visible) is not greater than the first boundary value (f(uv/visible)), in operation 1020, the electronic device 101 may determine whether the reference value (ir/visible) is less than a second boundary value (g(uv/visible)) determined based on a second boundary function (g). When the reference value (ir/visible) is less than the second boundary value (g(uv/visible)), in operation 1033, the electronic device 101 may determine that an ambient light source is a white indoor light source. When the reference value (ir/visible) is not less than the second boundary value (g(uv/visible)), in operation 1035, the electronic device 101 may determine that the ambient light source is an outdoor light source. Referring to FIG. 12, on the graph, data 1235 appearing in a region having a lower value on the vertical axis than the second boundary function 1220 may be determined to correspond to the white indoor light source. On the graph, data 1233 appearing between the second boundary function 1220 and the first boundary function 1210 may be determined to correspond to the outdoor light source.

In operation 930, the electronic device 101 may perform an operation related to image photographing, based on the classification of the determined light source.

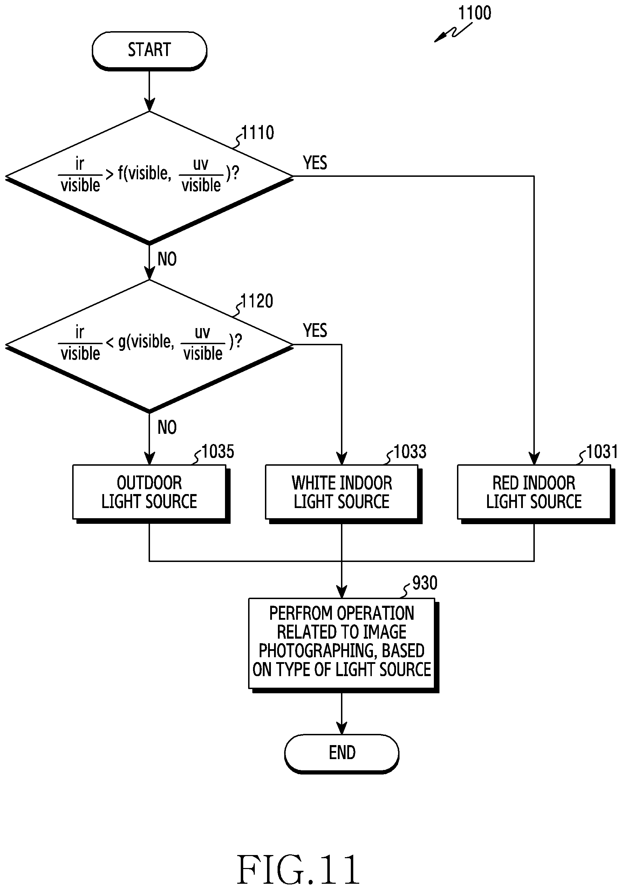

FIG. 11 is a flowchart 1100 illustrating an example of a process for distinguishing a light source, based on a three-dimensional space.

The electronic device 101 of an embodiment may classify a light source, based on ultra-violet data, visible data, and infra-red data. When the light source is classified based on the ultra-violet data, the visible data, and the infra-red data, since the data are classified based on three variables, the data may be represented in a three-dimensional graph. For example, the data may be classified based on the three-dimensional graph (not shown) that includes a visible value (Visible) axis in addition to the ultra-violet value (UV) / visible value (Visible) axis and the infra-red value (IR) / visible value (Visible) axis illustrated in FIG. 12.

The electronic device 101 may input a visible value (Visible) and an ultra-violet value / visible value (UV/Visible) to a first boundary function (f) and acquire a first boundary value (f(visible, uv/visible)). In operation 1110, the electronic device 101 may determine whether a reference value (ir/visible) is greater than the first boundary value (f(visible, uv/visible)). In contrast to FIG. 12, the first boundary function (f) may be represented as a surface in a three-dimensional graph. When the reference value (ir/visible) is greater than the first boundary value (f(visible, uv/visible)), in operation 1031, the electronic device 101 may determine that an image is photographed around a red indoor light source.

When the reference value (ir/visible) is not greater than the first boundary value (f(visible, uv/visible)), in operation 1120, the electronic device 101 may determine whether the reference value (ir/visible) is less than a second boundary value (g(visible, uv/visible)). When the reference value (ir/visible) is less than the second boundary value (g(visible, uv/visible)), in operation 1033, the electronic device 101 may determine that an ambient light source is a white indoor light source. When the reference value (ir/visible) is not less than the second boundary value (g(visible, uv/visible)), in operation 1035, the electronic device 101 may determine that the ambient light source is an outdoor light source. In comparison with FIG. 12, the second boundary function (g) may be a surface that appears closer to the origin in a three-dimensional space than the first boundary function (f).

In operation 930, the electronic device 101 may perform an operation related to image photographing, based on the classification of the determined light source. For example, when a light source around a subject is determined to be a red indoor light source in operation 1031, the electronic device 101 may perform a white balancing operation, based on a parameter for calibrating for red light. For example, when the light source around the subject is determined to be a white indoor light source in operation 1033, the electronic device 101 may perform a white balancing operation, based on a parameter corresponding to the white indoor light source. For example, when the light source is determined to be an outdoor light source in operation 1035, the electronic device 101 may perform a white balancing operation, based on a parameter corresponding to the outdoor light source.

The electronic device may control an operation for photographing an image depending on the type of a light source existing around a subject photographed in the image. For example, the electronic device may distinguish cases where the image is taken outdoors and indoors and apply different parameters for automatic white balancing (AWB) processing. Also, the electronic device may apply different parameters for automatic white balancing processing depending on a color temperature of an indoor light source.

However, when the electronic device wrongly distinguishes the type of a light source, since an inappropriate parameter is applied, an inappropriate color may appear in a provided image.

When the electronic device acquires an image by using a camera, even if the same subject is photographed, different image data may be acquired depending on the type of a light source irradiating the subject. For example, when the subject is photographed outdoors and a main light source is sunlight or when the subject is photographed indoors and the main light source is an indoor light source, a color of an image of the subject may appear different. Also, the color of the image of the subject may appear different depending on a color temperature of light radiated from the indoor light source.

In order to improve the quality of an image provided, the electronic device is required to control an operation related to image photographing differently depending on the main light source around the subject when photographing the subject. For example, the electronic device may adjust a parameter for performing automatic white balancing (AWB) depending on the type of a light source around the subject. For another example, the electronic device may automatically adjust the exposure of the camera depending on the type of the light source around the subject. Therefore, there may be a need for a method in which when photographing the subject, the electronic device accurately determines what the main light source around the subject is.

A technical task to be solved in this document is not limited to the technical task mentioned above, and other technical tasks not mentioned may be clearly understood by those skilled in the art to which the disclosure pertains from the description below.

An electronic device (example: electronic device 101 of FIG. 3) of an embodiment may include a camera (example: camera 380 of FIG. 3), at least one sensor (example: sensor 376 of FIG. 3), a memory (example: memory 330 of FIG. 3), and at least one processor (example: processor 330 of FIG. 3). The camera may be configured to acquire an image. The at least one sensor (example: sensor 376 of FIG. 3) may include an ultra-violet channel detecting light in an ultra-violet band (example: ultra-violet band 410 of FIG. 4), a visible channel detecting light in a visible band (example: visible band 420 of FIG. 4), and an infra-red channel detecting light in an infra-red band (example: infra-red band 430 of FIG. 4). Instructions may be stored in the memory (example: memory 330 of FIG. 3). The at least one processor (example: processor 330 of FIG. 3) may be operatively connected to the camera (example: camera 380 of FIG. 3), the at least one sensor (example: sensor 376 of FIG. 3), and the memory (example: memory 330 of FIG. 3). The at least one processor (example: processor 330 of FIG. 3) may be configured to, when executing the instructions, determine a reference value, based on a ratio of infra-red data acquired through the infra-red channel to visible data acquired through the visible channel. The at least one processor (example: processor 330 of FIG. 3) may be configured to determine that the type of an ambient light source for the image acquired through the camera (example: camera 380 of FIG. 3) is a first light source, when the reference value is greater than or equal to a first boundary value determined based on a ratio of ultra-violet data acquired through the ultra-violet channel to the visible data. The at least one processor (example: processor 330 of FIG. 3) may be configured to calibrate a color temperature of the image, based on the type of the light source.

According to an embodiment, the at least one processor (example: processor 330 of FIG. 3) may be configured to determine that the type of the ambient light source is a second light source, when the reference value is less than or equal to a second boundary value determined based on the ratio of the ultra-violet data to the visible data.

According to an embodiment, the at least one processor (example: processor 330 of FIG. 3) may be configured to input the ratio of the ultra-violet data to the visible data to a first boundary function and determine the first boundary value, and input the ratio of the ultra-violet data to the visible data to a second boundary function and determine the second boundary value.

According to an embodiment, the at least one processor (example: processor 330 of FIG. 3) may be configured to train, through a machine training algorithm, training data which include feature data determined based on the ultra-violet data, the visible data, and the infra-red data and labeling data indicating the type of the ambient light source, and acquire the first boundary function and the second boundary function.

According to an embodiment, the at least one processor (example: processor 330 of FIG. 3) may be configured to further input the visible data to the first boundary function and determine the first boundary value, and further input the visible data to the second boundary function and determine the second boundary value.

According to an embodiment, the at least one processor (example: processor 330 of FIG. 3) may be configured to determine an automatic white balancing parameter for calibrating the color temperature of the image, based on a difference with the first boundary value or the second boundary value from the ratio of the ultra-violet data to the visible data.

According to an embodiment, the first light source may be a red light source emitting red light, and the second light source may be a white light source emitting white light.

According to an embodiment, the at least one processor (example: processor 330 of FIG. 3) may be configured to determine that the type of the ambient light source is an outdoor light source, when the type of the ambient light source is not the first light source and the second light source.

According to an embodiment, the at least one sensor (example: sensor 376 of FIG. 3) may be configured wherein responsivity decreases as wavelength increases or decreases from a specified wavelength within a band of the visible channel.

According to an embodiment, the at least one sensor (example: sensor 376 of FIG. 3) may be configured wherein the responsivity follows a luminosity curve within the band of the visible channel.

An operating method of an electronic device (example: electronic device 101 of FIG. 3) of an embodiment may include acquiring an image through a camera (example: camera 380 of FIG. 3). The operating method may include determining a reference value, based on a ratio of infra-red data acquired through an infra-red channel of at least one sensor (example: sensor 376 of FIG. 3) to visible data acquired through a visible channel of the at least one sensor (example: sensor 376 of FIG. 3). The operating method may include determining that the type of an ambient light source for the image acquired through the camera (example: camera 380 of FIG. 3) is a first light source, when the reference value is greater than or equal to a first boundary value determined based on a ratio of ultra-violet data acquired through an ultra-violet channel of the at least one sensor (example: sensor 376 of FIG. 3) to the visible data. The operating method may include calibrating a color temperature of the image, based on the type of the light source.

An operating method of an electronic device (example: electronic device 101 of FIG. 3) of an embodiment may include determining that the type of the ambient light source is a second light source, when the reference value is less than or equal to a second boundary value determined based on the ratio of the ultra-violet data to the visible data.

An operating method of an electronic device (example: electronic device 101 of FIG. 3) of an embodiment may include inputting the ratio of the ultra-violet data to the visible data to a first boundary function and determining the first boundary value. The operating method of the electronic device (example: electronic device 101 of FIG. 3) may include inputting the ratio of the ultra-violet data to the visible data to a second boundary function and determining the second boundary value.

An operating method of an electronic device (example: electronic device 101 of FIG. 3) of an embodiment may include training, through a machine training algorithm, training data which include feature data determined based on the ultra-violet data, the visible data, and the infra-red data and labeling data indicating the type of the ambient light source, and acquiring the first boundary function and the second boundary function.

According to an embodiment, determining the first boundary value may include further inputting the visible data to the first boundary function and determining the first boundary value. Determining the second boundary value may include further inputting the visible data to the second boundary function and determining the second boundary value.

According to an embodiment, calibrating the color temperature may include determining an automatic white balancing parameter for calibrating the color temperature of the image, based on a difference with the first boundary value or the second boundary value from the ratio of the ultra-violet data to the visible data.

In an operating method of an embodiment, the first light source may be a red light source emitting red light, and the second light source may be a white light source emitting white light.

An operating method of an embodiment may include determining that the type of the ambient light source is an outdoor light source, when the type of the ambient light source is not the first light source and the second light source.

According to an embodiment, the at least one sensor (example: sensor 376 of FIG. 3) may be configured wherein responsivity decreases as wavelength increases or decreases from a specified wavelength within a band of the visible channel.

According to an embodiment, the at least one sensor (example: sensor 376 of FIG. 3) may be configured wherein the responsivity follows a luminosity curve within the band of the visible channel.

A computer-readable non-transitory storage medium (example: memory 130 of FIG. 1) of an embodiment may be a record of a computer program that, when executed, allows an electronic device to perform acquiring an image through a camera (example: camera 380 of FIG. 3), determining a reference value, based on a ratio of infra-red data acquired through an infra-red channel of at least one sensor (example: sensor 376 of FIG. 3) to visible data acquired through a visible channel of the at least one sensor (example: sensor 376 of FIG. 3), and determining that the type of an ambient light source for the image acquired through the camera (example: camera 380 of FIG. 3) is a first light source, when the reference value is greater than or equal to a first boundary value determined based on a ratio of ultra-violet data acquired through an ultra-violet channel of the at least one sensor (example: sensor 376 of FIG. 3) to the visible data.

According to the disclosure, there may be provided an electronic device and method in which the electronic device may more accurately determine the type of a light source since a distance between acquired data is formed farther depending on a light source.

Effects obtainable from the disclosure are not limited to the effects mentioned above, and other effects not mentioned may be clearly understood by those skilled in the art to which the disclosure pertains from the description below.

Methods of embodiments described in the claims or specification of the disclosure may be implemented in the form of hardware, software, or a combination of hardware and software.

When the methods are implemented by software, a computer-readable storage medium that stores one or more programs (software modules) may be provided. The one or more programs stored in the computer-readable storage medium are configured to be executable by one or more processors in an electronic device. The one or more programs include instructions of allowing the electronic device to execute the methods of the embodiments described in the claims or specification of the disclosure.

These programs (software modules, software) may be stored in random access memory, non-volatile memory including flash memory, read only memory (ROM), electrically erasable programmable ROM (EEPROM), magnetic disc storage device, compact disc-ROM (CD-ROM), digital versatile discs (DVDs) or other types of optical storage devices, and magnetic cassette. Alternatively, they may be stored in a memory composed of a combination of some or all of them. Also, each composed memory may be included in multiples as well.

Also, the program may be stored in an attachable storage device that may be accessed via a communication network such as Internet, intranet, local area network (LAN), wide LAN (WLAN), storage area network (SAN), or a combination thereof. The storage device may be connected to a device performing an embodiment of the disclosure via an external port. Also, a separate storage device on a communication network may be connected to a device performing an embodiment of the disclosure as well.

In the specific embodiments of the disclosure described above, components included in the disclosure are expressed singularly or plurally according to the specific embodiments presented. However, the singular or plural expressions are selected appropriately for the presented situation for the convenience of explanation, and the disclosure is not limited to singular or plural components, and even a component expressed in the plural may be composed of the singular or even a component expressed in the singular may be composed of the plural.

Also, in the disclosure, the terms "part", "module", etc. may be a hardware component such as a processor or a circuit, and/or a software component executed by the hardware component such as the processor.

"Part" and "module" may be also implemented by a program that may be stored in an addressable storage medium and be executed by a processor. For example, "part" and "module" may be implemented by components such as software components, object-oriented software components, class components, and task components, processes, functions, properties, procedures, subroutines, segments of program code, drivers, firmware, microcode, circuits, data, databases, data structures, tables, arrays, and variables.

The specific executions described in the disclosure are only examples and do not limit the scope of the disclosure in any way. For the sake of brevity, the description of conventional electronic components, control systems, software, and other functional aspects of the systems may be omitted.

Also, in the disclosure, "including at least one of a, b, or c" may mean "including only a", "including only b", "including only c", "including a and b", "including b and c", "including a and c", or "including all of a, b, and c".

Meantime, in the detailed description of the disclosure, specific embodiments have been described, but it is undoubted that various modifications are possible without departing from the scope of the disclosure. Therefore, the scope of the disclosure should not be limited to the described embodiments, but should be defined not only by the scope of the claims described later, but also by those equivalent to the scope of the claims.

## Claims

1. An electronic device comprising:
a camera configured to acquire an image;
at least one sensor comprising a ultra-violet channel detecting light in a ultra-violet band, a visible channel detecting light in a visible band, and an infra-red channel detecting light in an infra-red band;
a memory comprising instructions; and
at least one processor operatively connected to the camera, the at least one sensor, and the memory,
wherein the at least one processor is configured to: when executing the instructions,
determine a reference value, based on a ratio of infra-red data acquired through the infra-red channel to visible data acquired through the visible channel;
determine that the type of an ambient light source for the image acquired through the camera is a first light source, when the reference value is greater than or equal to a first boundary value determined based on a ratio of ultra-violet data acquired through the ultra-violet channel to the visible data; and
calibrate a color temperature of the image, based on the type of the light source.

2. The electronic device of claim 1, wherein the at least one processor is configured to determine that the type of the ambient light source is a second light source, when the reference value is less than or equal to a second boundary value determined based on the ratio of the ultra-violet data to the visible data.

3. The electronic device of claim 2, wherein the at least one processor is configured to:
input the ratio of the ultra-violet data to the visible data to a first boundary function and determine the first boundary value; and
input the ratio of the ultra-violet data to the visible data to a second boundary function and determine the second boundary value.

4. The electronic device of claim 3, wherein the at least one processor is configured to train, through a machine training algorithm, training data which comprise feature data determined based on the ultra-violet data, the visible data, and the infra-red data and labeling data indicating the type of the ambient light source, and acquire the first boundary function and the second boundary function.

5. The electronic device of claim 3, wherein the at least one processor is configured to:
further input the visible data to the first boundary function and determine the first boundary value; and
further input the visible data to the second boundary function and determine the second boundary value.

6. The electronic device of claim 3, wherein the at least one processor is configured to determine an auto white balancing parameter for correcting the color temperature of the image, based on a difference with the first boundary value or the second boundary value from the ratio of the ultra-violet data to the visible data.

7. The electronic device of claim 2, wherein the first light source is a red light source emitting red light, and
the second light source is a white light source emitting white light.

8. The electronic device of claim 7, wherein the at least one processor is configured to determine that the type of the ambient light source is an outdoor light source, when the type of the ambient light source is not the first light source and the second light source.

9. The electronic device of claim 1, wherein the at least one sensor is configured wherein responsivity decreases as wavelength increases or decreases from a specified wavelength within a band of the visible channel.

10. The electronic device of claim 9, wherein the at least one sensor is configured wherein the responsivity follows a luminosity curve within the band of the visible channel.

11. An operating method of an electronic device, comprising:
acquiring an image through a camera;
determining a reference value, based on a ratio of infra-red data acquired through an infra-red channel of at least one sensor to visible data acquired through a visible channel of the at least one sensor;
determining that the type of an ambient light source for the image acquired through the camera is a first light source, when the reference value is greater than or equal to a first boundary value determined based on a ratio of ultra-violet data acquired through a ultra-violet channel of the at least one sensor to the visible data; and
calibrating a color temperature of the image, based on the type of the light source.

12. The method of claim 11, further comprising determining that the type of the ambient light source is a second light source, when the reference value is less than or equal to a second boundary value determined based on the ratio of the ultra-violet data to the visible data.

13. The method of claim 12, comprising:
inputting the ratio of the ultra-violet data to the visible data to a first boundary function and determining the first boundary value; and
inputting the ratio of the ultra-violet data to the visible data to a second boundary function and determining the second boundary value.

14. The method of claim 13, comprising training, through a machine training algorithm, training data which comprise feature data determined based on the ultra-violet data, the visible data, and the infra-red data and labeling data indicating the type of the ambient light source and acquiring the first boundary function and the second boundary function.

15. The method of claim 13, wherein determining the first boundary value comprises further inputting the visible data to the first boundary function and determining the first boundary value, and
determining the second boundary value comprises further inputting the visible data to the second boundary function and determining the second boundary value.
